# EUROPEAN PATENT SPECIFICATION

(11) **EP 3 543 882 B1**
(45) Date of publication and mention of the grant of the patent: **30.06.2021**
(21) Application number: 18833377.7
(22) Date of filing: 12.02.2018
(51) Int. Cl.: G06F 21/16, G06F 21/60, H04L 29/06, H04W 12/02

(54) **METHOD AND SYSTEM FOR IDENTIFYING ORIGINAL DATA BY USING DATA ORDER**
VERFAHREN UND SYSTEM ZUR IDENTIFIZIERUNG VON ORIGINALDATEN UNTER VERWENDUNG EINER DATENFOLGE
PROCÉDÉ ET SYSTÈME D'IDENTIFICATION DE DONNÉES ORIGINALES AU MOYEN D'UN ORDRE DE DONNÉES

(43) Date of publication of application: 25.09.2019
(73) Proprietor: EASYCERTI, Guro-gu Seoul 08377 (KR)
(72) Inventor: SHIM, Gi Chang, Yeongdeungpo-gu Seoul 07340 (KR); KIM, Dong Rye, Dongjak-gu Seoul 07054 (KR); KWON, Jung Hyun, Seoul 08307 (KR)
(74) Representative: RGTH
(86) International application number: PCT/KR2018/001847
(87) International publication number: WO 2019/156271

(56) References cited:
- WO-A1-2015/077542
- US-A1- 2008 275 900
- US-A1- 2008 275 900
- US-A1- 2011 270 837
- US-A1- 2014 137 262
- US-A1- 2015 007 249
- US-A1- 2015 161 397
- US-B1- 9 465 954
- US-B1- 9 465 954

## Description

### [Technical Field]

The present disclosure relates to method and system for identifying original data, and more specifically, to method and system for identifying original data using a data sequence.

### [Background Art]

"Big data" means structured or unstructured data sets that are difficult to capture, store, search, analyze, and visualize with traditional methods or tools for its massive scale compared to the existing data. Examples of the areas that can apply the big data processing and analysis techniques include public service, science, medical, wholesale and retail, manufacturing, information and communication sectors, and the information communication in particular is growing with the big data processing and analysis technologies related to user's behavior pattern, history, and surrounding situations based on the user data in the digital space generated according to the development of mobile communications and the exploding use of personal terminals.

As the use of big data increases significantly, there are cases where non-identification measures, and the like are taken and the data is distributed to the authorized users with access to the data in order to prevent exposure of sensitive personal information contained in the big data. The 'non-identification of personal information' as used herein refers to a technical measure that prevents identification of a specific individual even when combined with other information, by deleting or replacing some or all of the personal information through data value deletion, alias processing, aggregate processing, categorization, data masking or the like.

For example, US 2015/0007249 relates to methods of anonymization of data sets. Further, US 2008/0275900 discloses methods and apparatus for shuffling data to make the data anonymous.

However, there is a case where the distributed data is leaked to the outside due to intention or carelessness of the user who is provided with the distributed data. In this case, the personal information may be regenerated by the process of combining, analyzing, or processing the distributed data, regardless of whether the distributed data is non-identified data.

Therefore, when the distributed data is re-distributed to unauthorized users in an unauthorized or illegal manner, there is a need for a method for tracking and identifying the user from whom the original data is re-distributed.

### [Disclosure]

### [Technical Problem]

Accordingly, it is an object of the present disclosure to provide method and system for identifying original data using a data sequence of an original data set.

### [Technical Solution]

The invention is defined by the appended claims. According to an aspect of the present disclosure, there is provided a data management apparatus which may include a transformed data set generation unit that generates a transformed data set by randomly mixing a sequence of rows or columns of an original data set formed in rows and columns, and a data management unit that provides the transformed data set to the user terminal and matches and stores information on the sequence of rows or columns of the transformed data set that is randomly mixed from the original data set, and information on a user who is provided with the transformed data set.

The transformed data set generation unit may differently mix the sequence of the rows or columns of the original data set each time the transformed data set is generated from the original data set.

The transformed data set generation unit may process at least a part of original data included in the original data set to non-identifiable data.

When a predetermined transformed data set is provided, the data management unit may identify the user who is provided with the predetermined transformed data set, using the information on the sequence of rows or columns of the predetermined transformed data set.

According to the present disclosure for solving the above technical problem, there is provided a data management method, which may include generating a transformed data set by randomly mixing a sequence of rows or columns of an original data set formed in rows and columns, providing the transformed data set to a user terminal, and matching and storing information on the sequence of rows or columns of the transformed data set that is randomly mixed from the original data set, and information on a user who is provided with the transformed data set.

When a predetermined transformed data set is provided, the data management method may further include identifying a user who is provided with the predetermined transformed data set, using information on a sequence of rows or columns of the predetermined transformed data set.

### [Advantageous Effects]

According to embodiments of the present disclosure, when the distributed data is re-distributed to unauthorized users in an unauthorized or illegal manner, it is possible to track and identify a user from whom the original data is re-distributed.

### [Description of Drawings]

FIG. 1 is a block diagram showing a configuration of an original data identification system using a data sequence according to an embodiment of the present disclosure.
FIG. 2 is a block diagram showing a configuration of the data management apparatus of FIG. 1 in detail.
FIG. 3 is a diagram showing an original data set and a transformed data set according to an embodiment of the present disclosure.
FIG. 4 is a flowchart illustrating an original data identification method using a data sequence according to an embodiment of the present disclosure.

### [Best Mode]

Hereinafter, preferred embodiments of the present disclosure will be described in detail with reference to the accompanying drawings so that those with ordinary knowledge in the art may easily achieve the present disclosure.

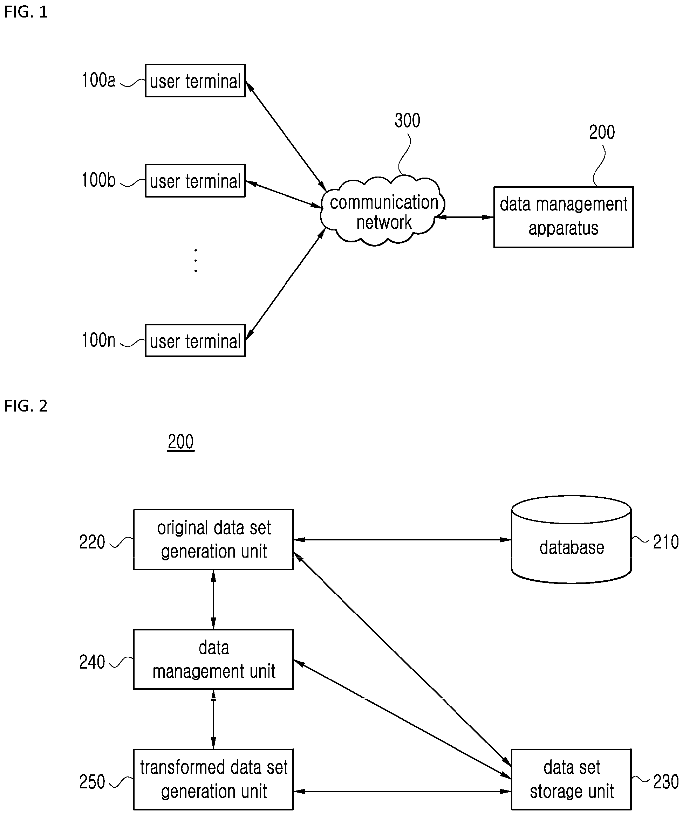

FIG. 1 is a block diagram showing a configuration of an original data identification system using a data sequence according to an embodiment of the present disclosure.

Referring to FIG. 1, an original data identification system using a data sequence according to the present disclosure may include a plurality of user terminals 100a, 100b, ..., 100n and a data management apparatus 200 which may be connected to each other through a communication network 300 to exchange various request information and data.

The data management apparatus 200 generates a transformed data set by randomly mixing the sequence of the rows or columns of the original data set formed in rows and columns and provide the transformed data set to the user terminal.

The data management apparatus 200 may match and store information on the sequence of the rows or columns of the transformed data set randomly mixed from the original data set, and information on the user who is provided with the transformed data set.

When a predetermined transformed data set is provided, the data management apparatus 200 may identify the user who is provided with the predetermined transformed data set, using the information on the sequence of rows or columns of the predetermined transformed data set.

The user terminals 100a, 100b, ..., 100n may receive data from the data management apparatus 200 in response to a user's request and may be implemented as a terminal, which is provided with a memory means and equipped with a microprocessor for computing capability, such as a desktop computer, a laptop computer, a workstation, a palmtop computer, an ultra mobile personal computer (UMPC), a tablet PC, a personal digital assistant (PDA), a web pad, a mobile phone, a smart phone or the like.

The communication network 300 may be a local area network (LAN), a metropolitan area network (MAN), a wide area network (WAN), the Internet, and the like, without being limited to any specific communication method, and including both wired and wireless communication methods.

FIG. 2 is a block diagram showing a configuration of the data management apparatus of FIG. 1 in detail.

Referring to FIG. 2, the data management apparatus 200 may include a database unit 210, an original data set generation unit 220, a data set storage unit 230, a data management unit 240, and a transformed data set generation unit 250.

The database unit 210 may perform a function of constructing and storing a database of data managed at the data management apparatus 200 and may provide a function of capturing, storing and managing a large amount of data sets that is referred to as the "big data".

The original data set generation unit 220 performs a function of generating an original data set that is formed with rows and columns of original data extracted from the database unit 210. The original data set generation unit 220 may store the original data set in the data set storage unit 230.

The data set storage unit 230 may store the original data set generated by the original data set generation unit 220. In addition, the data set storage unit 230 may match and store the information on the sequence of the rows or columns of the transformed data set that is randomly mixed from the original data set, and the information on the user who is provided with the transformed data set.

The data management unit 240 causes the original data set generation unit 220 to generate the original data set in response to the request of the user and performs a function of providing a transformed data set transformed from the original data set by the transformed data set generation unit 250.

The data management unit 240 may cause the data set storage unit 230 to store the original data set matched with the information on the sequence of the rows or columns of the transformed data set randomly mixed from the original data set and the information on the user who is provided with the transformed data set.

When a predetermined transformed data set is provided, the data management unit 240 may identify the user who is provided with the predetermined transformed data set, using the information on the sequence of rows or columns of the predetermined transformed data set.

The transformed data set generation unit 250 generates a transformed data set by randomly mixing the sequence of the rows or columns of the original data set formed in rows and columns.

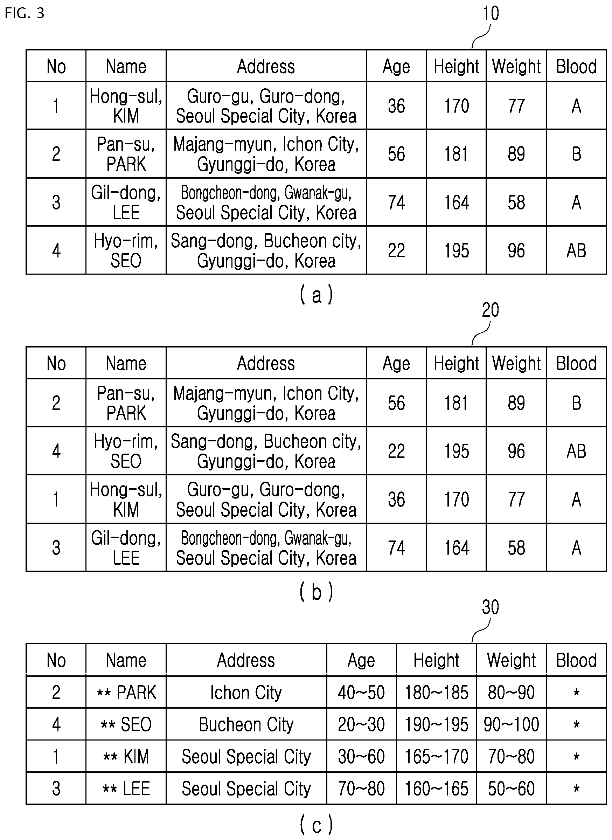

FIG. 3 is a diagram showing an original data set and a transformed data set according to an embodiment of the present disclosure.

The transformed data set generation unit 250 may generate a transformed data set as illustrated in FIG. 3B by mixing the sequence of the rows of the original data sets illustrated in FIG. 3A.

In addition, as shown in FIG. 3C, the transformed data set generation unit 250 may mix the sequence of the rows of the original data set, while concurrently processing some of the original data to non-identifiable data, to generate the transformed data set. FIG. 3C illustrates a method of processing information on names, addresses, ages, heights, weights, blood types or the like to non-identifiable data, by masking a part of a name with "**", masking the entire blood type with "*", deleting detailed addresses, and representing the addresses with only a city unit address or the like, for example. Likewise, personal information may be processed to non-identifiable information, by grouping the ages, heights, weights or the like into certain ranges.

The transformed data set generation unit 250 may differently mix the sequence of the rows or columns of the original data set each time the transformed data set is generated from the original data set.

Accordingly, when receiving a predetermined transformed data set later, the data management unit 240 may identify the user who is provided with the corresponding transformed data set, using the sequence of the rows or columns that are differently mixed in each of the transformed data sets.

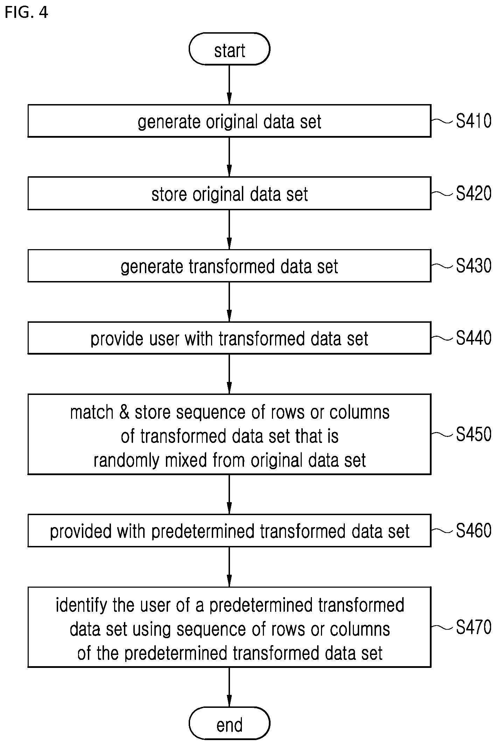

FIG. 4 is a flowchart illustrating an original data identification method using a data sequence according to an embodiment of the present disclosure.

Referring to FIG. 4, first, the original data set generation unit 220 may generate an original data set that is formed with rows and columns of original data extracted from the database unit 210, at S410.

The original data set generation unit 220 may store the original data set generated at S410 in the data set storage unit 230, at S420.

Then the transformed data set generation unit 250 may generate a transformed data set by randomly mixing the sequence of the rows or columns of the original data set formed in rows and columns, at S430. In some embodiments, at S430, the transformed data set generation unit 250 may mix the sequence of the rows of the original data set, while concurrently processing a part of the original data to non-identifiable data, to generate the transformed data set. In addition, the transformed data set generation unit 250 differently transforms the sequence of rows or columns each time the transformed data set is generated from the same original data set.

The data management unit 240 may provide the transformed data set transformed by the transformed data set generation unit 250 to the user terminals 100a, 100b, ..., 100n, at S440.

The data management unit 240 may cause the data set storage unit 230 to match and store the information on the sequence of the rows or columns of the transformed data set that is randomly mixed from the original data set, and the information on the user who is provided with the transformed data set.

In some embodiments, the operations at S440 and S450 may be performed in a reversed sequence or simultaneously.

Then when a predetermined transformed data set is provided at S460, the data management unit 240 may identify the user who is provided with the predetermined transformed data set, using the information on the sequence of rows or columns of the predetermined transformed data set.

Embodiments of the present disclosure include a computer-readable medium that includes program instructions for performing various computer-implemented operations. This medium records a program for executing the original data identification method using the data sequence described above. The medium may include program instructions, data files, data structures, etc., alone or in combination. Examples of such medium include magnetic medium such as hard disks, floppy disks and magnetic tape, optical recording medium such as CD and DVD, floptical disk and magneto-optical medium, hardware devices configured to store and execute program instructions, such as ROM, RAM, flash memory, etc. Examples of program instructions include machine language codes such as those generated by a compiler, as well as high-level language codes that may be executed by a computer using an interpreter, and so on.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A data management apparatus comprising:
a transformed data set generation unit (250) that generates a transformed data set by randomly mixing a sequence of rows or columns of an original data set formed in rows and columns; and
a data management unit (240) that provides the transformed data set to the user terminal (100a, 100b, 100n), **characterized in**
**that** the data management unit (240) matches and stores information on the sequence of rows or columns of the transformed data set that is randomly mixed from the original data set, and information on a user who is provided with the transformed data set, wherein the transformed data set generation unit (250) uses the sequence of the rows or the columns of the original data set that is differently mixed each time the transformed data set is generated from the original data set, and
wherein, when a predetermined transformed data set is provided, the data management unit (240) identifies a user who is provided with the predetermined transformed data set, using information on a sequence of rows or columns of the predetermined transformed data set.

2. The data management apparatus of claim 1, wherein the transformed data set generation unit (250) processes at least a part of original data included in the original data set to non-identifiable data.

3. A data management method comprising:
generating a transformed data set by randomly mixing a sequence of rows or columns of an original data set formed in rows and columns (S430);
providing the transformed data set to a user terminal (S440);
**characterized in**
**that** the data management method further comprises:
matching and storing information on the sequence of rows or columns of the transformed data set that is randomly mixed from the original data set, and information on a user who is provided with the transformed data set (S450),
wherein differently mixing the sequence of the rows or columns of the original data set each time the transformed data set is generated from the original data set; and
when a predetermined transformed data set is provided (S460), identifying a user who is provided with the predetermined transformed data set, using information on a sequence of rows or columns of the predetermined transformed data set. (S470).

4. The data management method of claim 3, comprising processing at least a part of original data included in original data set to non-identifiable data.

## Patentansprüche

1. Datenverwaltungsvorrichtung, umfassend:
eine Erzeugungseinheit für transformierte Datensätze (250), die einen transformierten Datensatz durch zufälliges Mischen einer Reihenfolge von Zeilen oder Spalten eines ursprünglichen Datensatzes erzeugt, der in Zeilen und Spalten gebildet ist; und
eine Datenverwaltungseinheit (240), die dem Benutzerterminal (100a, 100b, 100n) den transformierten Datensatz bereitstellt, **dadurch gekennzeichnet, dass**
die Datenverwaltungseinheit (240) Informationen über die Reihenfolge von Zeilen oder Spalten des transformierten Datensatzes, der zufällig aus dem ursprünglichen Datensatz gemischt wird, und mit Benutzerinformationen, die mit dem transformierten Datensatz versehen sind, abgleicht und diese speichert, wobei die Erzeugungseinheit für transformierte Datensätze (250) die Reihenfolge der Zeilen oder Spalten des ursprünglichen Datensatzes verwendet, die jedes Mal anders gemischt wird, wenn der transformierte Datensatz aus dem ursprünglichen Datensatz erzeugt wird, und
wobei, wenn ein vorbestimmter transformierter Datensatz bereitgestellt wird, die Datenverwaltungseinheit (240) einen Benutzer identifiziert, der mit dem vorbestimmten transformierten Datensatz versehen ist, unter Verwendung von Informationen über eine Reihenfolge von Zeilen oder Spalten des vorbestimmten transformierten Datensatzes.

2. Datenverwaltungsvorrichtung gemäß Anspruch 1, wobei die Erzeugungseinheit für transformierte Datensätze (250) mindestens einen Teil der in dem ursprünglichen Datensatz enthaltenen Originaldaten zu nicht identifizierbaren Daten verarbeitet.

3. Datenverwaltungsverfahren, umfassend:
Erzeugen eines transformierten Datensatzes durch zufälliges Mischen einer Reihenfolge von Zeilen oder Spalten eines ursprünglichen Datensatzes, der in Zeilen und Spalten gebildet wird (S430);
Bereitstellen des transformierten Datensatzes an ein Benutzerterminal (S440); **dadurch gekennzeichnet, dass**
das Datenverwaltungsverfahren ferner Folgendes umfasst:
Abgleichen und Speichern von Informationen über die Reihenfolge von Zeilen oder Spalten des transformierten Datensatzes, der zufällig aus dem ursprünglichen Datensatz gemischt wird, und Benutzerinformationen, die mit dem transformierten Datensatz versehen sind (S450),
wobei die Reihenfolge der Zeilen oder Spalten des ursprünglichen Datensatzes jedes Mal, wenn der transformierte Datensatz aus dem ursprünglichen Datensatz erzeugt wird, unterschiedlich gemischt wird; und
wenn ein vorbestimmter transformierter Datensatz bereitgestellt wird (S460), Identifizieren eines Benutzers, der mit dem vorbestimmten transformierten Datensatz versehen ist, unter Verwendung von Informationen über eine Reihenfolge von Zeilen oder Spalten des vorbestimmten transformierten Datensatzes (S470).

4. Datenverwaltungsverfahren gemäß Anspruch 3, umfassend das Verarbeiten mindestens eines Teils der im ursprünglichen Datensatz enthaltenen ursprünglichen Daten zu nicht identifizierbaren Daten.

## Revendications

1. Appareil de gestion de données comprenant :
une unité de génération de jeu de données transformées (250) qui génère un jeu de données transformées par le mélange aléatoire d'une séquence de rangées ou de colonnes d'un jeu de données initiales formé en rangées et colonnes ; et
une unité de gestion de données (240) qui fournit le jeu de données transformées au terminal d'utilisateur (100a, 100b, 100n), **caractérisé en ce que**
l'unité de gestion de données (240) apparie et stocke des informations sur la séquence de rangées ou de colonnes du jeu de données transformées qui est aléatoirement mélangée à partir du jeu de données initiales, et des informations sur un utilisateur auquel le jeu de données transformées est fourni, dans lequel l'unité de génération de jeu de données transformées (250) utilise la séquence de rangées ou de colonnes du jeu de données initiales qui est mélangée différemment chaque fois que le jeu de données transformées est généré à partir du jeu de données initiales, et
dans lequel, lorsqu'un jeu de données transformées prédéterminé est fourni, l'unité de gestion de données (240) identifie un utilisateur auquel le jeu de données transformées prédéterminé est fourni, en utilisant des informations sur une séquence de rangées ou de colonnes du jeu de données transformées prédéterminé.

2. Appareil de gestion de données selon la revendication 1, dans lequel l'unité de génération de jeu de données transformées (250) traite au moins une partie de données initiales incluses dans le jeu de données initiales en données non identifiables.

3. Procédé de gestion de données comprenant :
la génération d'un jeu de données transformées par le mélange aléatoire d'une séquence de rangées ou de colonnes d'un jeu de données initiales formé en rangées et colonnes (S430) ;
la fourniture du jeu de données transformées à un terminal d'utilisateur (S440) ;
**caractérisé en ce que** le procédé de gestion de données comprend en outre :
l'appariement et le stockage d'informations sur la séquence de rangées ou de colonnes du jeu de données transformées qui est aléatoirement mélangée à partir du jeu de données initiales, et d'informations sur un utilisateur auquel le jeu de données transformées est fourni (S450),
dans lequel la séquence de rangées ou de colonnes du jeu de données initiales est mélangée différemment chaque fois que le jeu de données transformées est généré à partir du jeu de données initiales ; et
lorsqu'un jeu de données transformées prédéterminé est fourni (S460), l'identification d'un utilisateur auquel le jeu de données transformées prédéterminé est fourni, en utilisant des informations sur une séquence de rangées ou de colonnes du jeu de données transformées prédéterminé (S470).

4. Procédé de gestion de données selon la revendication 3, comprenant le traitement d'au moins une partie de données initiales incluses dans le jeu de données initiales en données non identifiables.
